# EUROPEAN PATENT APPLICATION

(11) **EP 2 749 170 A1**
(43) Date of publication of application: **02.07.2014**
(21) Application number: 12008629.3
(22) Date of filing: 27.12.2012
(51) Int. Cl.: A23C 9/156, A23L 2/38, A23L 2/385, A23L 2/52, A23L 2/56, A23L 1/187, A23L 1/221

(54) **A liquid food product containing cocoa and method for preparing it**

(71) Applicant: Liquats Vegetals SA, Girona (ES)
(72) Inventor: Erra Serrabasa, Josep M., 17430 Santa Coloma de Farners (Girona) (ES); Gol, Oriol, 17406 Viladrau (Girona) (ES)
(74) Representative: Juncosa Miro, Jaime

(57) **Abstract**

A liquid food product (beverage) is obtained by preparing a mixture with milk, optionally water, hazelnuts, cocoa and dry marine alga as a stabilizer, grinding the hazelnuts or using hazelnut paste, so that said mixture produces a liquid part providing said liquid food product.

## Description

The present invention relates to a cocoa-containing liquid food product and to a method for obtaining said liquid food product.

The invention provides a drinkable liquid food product incorporating as components milk, cacao and hazelnuts.

Several food products containing cocoa, some of them being drinkable liquids and others being in a solid form, are known in the state of the art, the drinkable products having in common the fact that they form a beverage known as "cocoa milk or chocolate or cocoa beverages". The benefit of cocoa antioxidants or cocoa polyphenol compounds are known and additional food products containing cocoa are being investigated. Similarly, the benefits of nuts and hazelnuts in particular are known in the art, but the range of food products containing hazelnut is extremely reduced.

There is the need to provide an alternative to the state of the art processes and products by means of a novel method that is simple and economical to carry out and that results in a stable and palatable product with excellent nutritional properties.

This problem is solved by the present invention that provides a process of producing a milk beverage that enables to obtain a food product in the form of a drinkable liquid containing milk, hazelnut and cacao. The invention provides a novel cocoa beverage that combines the properties of milk beverages with the properties of hazelnuts and of cocoa polyphenol-containing products, concentrates or extracts to produce a novel beverage.

Hazelnuts are present in a finely ground condition and are most preferably obtained from whole hazelnuts; the hazelnuts can be wet ground with the warm milk or can be previously ground and then added to the milk, preferably, the hazelnuts are previously ground to provide a hazelnut paste and then added to the milk.

According to an aspect of the invention, marine algae, i.e. seaweed, are added to the beverage composition, preferably as dry marine algae, both as a stabilizer and a source of nutritional elements. Optionally, the beverage can further include vitamins, calcium or other minerals, energizing or stimulating ingredients, or mixtures thereof. The beverage may further include emulsifiers and stabilizers, in a known way.

The invention may use liquid milk or powder milk added with water to regenerate liquid milk. Milk beverages which incorporate hazelnuts and cocoa are not known in the art, also in view of the foreseen problems in incorporating the hazelnuts in a beverage. It was found that the method according to the invention solves the problem in a surprisingly effective way.

In a first aspect, the present invention relates to a method for obtaining a milk-based drinkable liquid food product, in particular a beverage, from the following ingredients: milk, water, cocoa and deshelled hazelnuts.

The method comprises a first step of:
a) preparing a mixture with the following ingredients:
   - milk,
   - water,
   - hazelnuts

The milk can be whole or defatted and may be liquid or powder milk with added water. The amount of water added to the mixture depends on the density of the product and is enough to provide the required fluidity for the following steps.

The following steps are as follows:
b) heating the mixture;
c) homogenizing said mixture;
d) adding cocoa or cocoa-containing products to the mixture;

The hazelnuts are already crushed or are crushed while preparing said mixture or are in paste form, to provide a drinkable liquid containing milk products, hazelnut-derived products, cocoa and/or cocoa products.

In an exemplary embodiment of the invention, the hazelnuts are added as de-shelled nuts and are ground with said milk and water in step a), to obtain a fluid paste. According to this embodiment, the method further comprises the step of:
e) separating a liquid part to be used in the final beverage from the paste obtained at step c), i.e. after homogenization. Step d), i.e. addition of cocoa or cocoa containing products, can be carried out to the mixture in step a) or to the liquid part obtained at step e). Step e) is carried out by known techniques such as centrifugation, decanting or filtration.

In another exemplary embodiment of the invention, the hazelnuts are added to the mixture, as a finely ground or, preferably, in paste form, together with the rest of the ingredients. The mixture is then homogenized to provide a final product; no separation is usually required according to this embodiment.

In both cases the addition results in providing a drinkable liquid containing milk, hazelnut-derived products and cocoa; the wording hazelnut-derived products is used to define the products that are obtained by treating milk and hazelnuts as above discussed, in particular, the beverage will contain milk fats and proteins, hazelnut fibers, fats and proteins, cocoa and/or cocoa containing products. Hazelnut's paste is considered a hazelnut-derived product.

Preferably, an emulsifier, e.g. a lecityn and or stabilizers are added to the mixture.

The amounts of starting materials are as follows (percent by weight on the total final drink composition).
- Hazelnuts: 1%-5%, preferably 2.5%-4%,
- Cacao: 0.5%-2.5%, preferably 1.0%-2%
- milk and water enough to top up the components to 100% by weight.

Dry marine seaweed may be present in the formulation; if present, they are preferably provided in an amount of 0.01-0.15%.

Different ingredients such as calcium salts or other minerals, sugars, sweeteners, vitamins, soluble cereals, coffee, emulsifiers and stabilizers which can comprise from 0 to 5% of the total weight of the composition, can be added to this liquid part.

The milk and crushed hazelnuts, if the hazelnuts have been added and crushed, are heated to a temperature that is preferably within the range of 60 to 95 °C, preferably 75 to 95°C, so that said mixture produces a fluid paste containing both soluble and insoluble proteins. The mentioned heat supply to the described process for preparing the mixture is carried out in a preferred embodiment by using powder milk and hot water at a temperature of 60-95°C. If seaweeds, are present, they are preferably treated together with hazelnuts and subjected together to the same process steps.

In the preferred embodiment, the heating is carried out for a time within the range of 2 to 5 minutes in water at the required temperature; during the thermal treatment, the hazelnuts will release into the water mixture the following products: proteins, fibers, calcium, vitamins, aminoacids, fats, in particular unsaturated fatty acids, fitosterols, copper and other minerals, in particular Ca, P, Mg and K.

The obtained mixture is then homogenized and from the resulting homogenized fluid paste a first part, a thick paste containing the insoluble proteins, is separated in a way known in the art, leaving a second liquid part providing said food product in a liquid form.

Homogenization is carried out before separation, preferably at a pressure within the range of 180 to 400 bar, most preferably at the range of 185 to 215 bars. The separation is preferably carried out by centrifugation, in a decanter: the solids are retained in the decanter and the liquid exits the decanter upon centrifugation. Hazelnuts are either raw or toasted (thermally treated), or a combination of both.

The dry seaweed, i.e. marine algae, is obtained from a whole alga, preferably being one or more of a red alga of the genus Chondrus, species Chrondus Crispus, a red alga of the genus Gigartina, e.g Gigartina mammillosa and Gigartina acicularis, or a red alga of the genus Eucheuma, depending on the embodiment.

In another exemplary embodiment of the method of the invention, the hazelnuts are ground separately and the ground hazelnut, generally in the form of a paste, is added to the mixture at step a) together with cocoa, and additional ingredients.

In this embodiment, an additional homogenization step is carried out on the mixture after adding the hazelnut paste, without carrying out the centrifugation and separation steps. The conditions for homogenization are the same as those above discussed.

Thus, at least one homogenization step is carried out on a mixture comprising:
- ground hazelnuts between 1 and 5% by weight with respect to the total mixture
- cocoa or cocoa-containing products (e.g. chocolate) 0.5 to 2.0% by weight of the total mixture.
- additional ingredients such as calcium salts or other minerals, sugars, sweeteners, vitamins, soluble cereals, coffee, emulsifiers and stabilizers from 0 to 5% of the total weight of the composition, and
- milk and optionally water enough to top up the remaining components to 100% by weight.

Preferably, the amount of said additional ingredients is 0.1 -0,8% by weight of the dry matter content of the final product.

In a second aspect, the invention provides a cocoa liquid food product, as obtainable with the above mentioned process, containing milk, hazelnut-derived products and cocoa.

In an exemplary embodiment, the liquid food product comprises:
- 1 % to 5% by weight of hazelnut derivatives,
- 0.5 to 2.0% by weight of cocoa and/or cocoa containing products
- optionally 0.01 to 0.12% by weight of soluble products from dry marine algae, and
- milk and optionally water up to 100% by weight.

More specifically, the liquid product is an aqueous composition comprising milk, cocoa and hazelnuts proteins and fats, in which the hazelnut fats are dispersed in the form of an emulsion.

The drinkable food product object of the present invention can be further added with at least one additional ingredient of the group consisting of the following ingredients: calcium salts or other minerals and vitamins in a ratio of up to 0.5% of the total weight of dry matter; and soluble cereals, sugars, sweeteners, coffee, or a combination thereof comprising 0.1-15% of the total weight of dry matter.

Other features and advantages of the invention will be observed in the description of examples which are detailed below by way of a non-limiting explanation with reference to the enclosed non-limiting figures where:
Fig. 1 is a flow chart showing preparation of a beverage according to a first embodiment of the method of the invention;

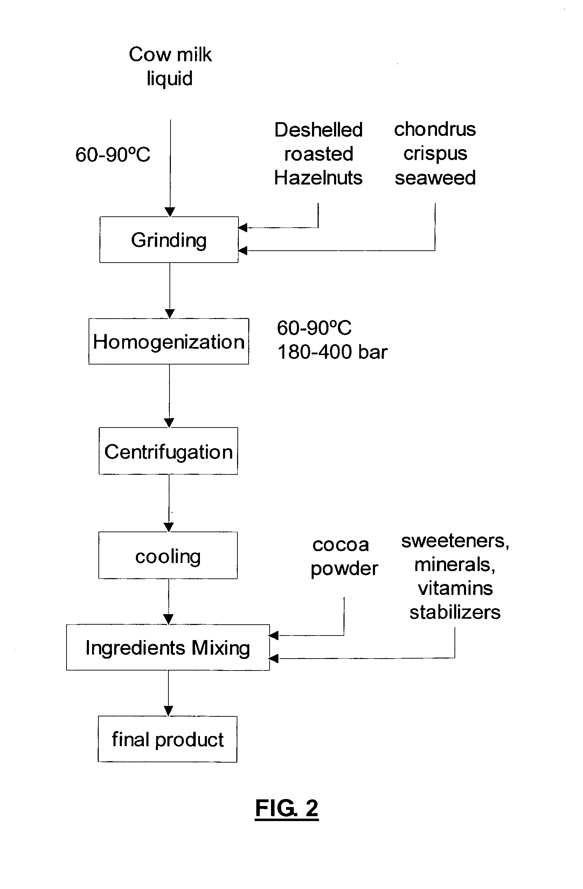

Fig. 2 is a flow chart showing preparation of a beverage according to another embodiment of the method of the invention.

### Example 1. Preparation of a cocoa, hazelnut and milk beverage from hazelnut paste.

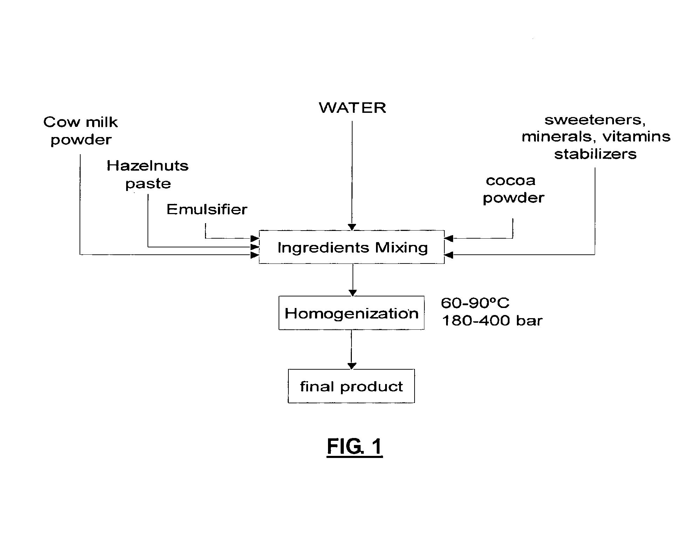

*The flow chart of this preparation is shown in* *Fig.1**. In the preparation, powder milk is added to a mixer together with water at a temperature of 60-95°C preferably at 75-95°C.*

*To the liquid portion in the mixer are added hazelnut paste, cocoa powder emulsifiers, e.g. lecithin, and (optionally) sweeteners, minerals, vitamins and similar additional ingredients. If necessary water is added to reach the required fluidity of the product. This mixture is then subjected to an homogenization step at 180-400 bar and at a temperature of 60-90°C; the homogenized mixture is subsequently treated in a known way for final packaging, usually including a filtering step and UHT treatment. The final product has an excellent taste and there is no or very limited sedimentation of the components of the hazelnut paste in the final package.*

*In an exemplary embodiment the following amounts are used:*
*118 to 120 kg of milk powder*
*847 to 830 liters of water in the first step*
*20 to 30 kg of hazelnut paste*
*15 to 20 kg of cocoa powder*

### Example 2. Preparation of a cocoa, hazelnut and milk beverage from milk and hazelnut nuts.

*The flow chart of this preparation is shown inFfig.2. In the preparation, deshelled hazelnuts, usually roasted hazelnuts, are ground in water or milk at a temperature of 60-95°C preferably at 75-95°C. Seaweed, namely chondrus crispus, may be added to the nuts and ground with them.*

*The resulting hot fluid paste is homogenized at the same temperature of the grinding step or in any case at a temperature of at least 60°C and at a pressure of 180-400 bar. Following this step the fluid paste undergoes centrifugation, the liquid portion containing emulsified fats and soluble proteins is separated, cooled and fed to a mixer.*

*To the liquid portion in the mixer are added cocoa powder, possibly emulsifiers, e.g. lecithin, and (optionally) sweeteners, minerals, vitamins and similar additional ingredients. If necessary water is added to reach the required fluidity of the product. This mixture is then subjected to another homogenization step at 180-400 bar and is subsequently filtered and treated for final packaging, usually including UHT treatment. The final product has an excellent taste and there is no or very limited sedimentation of the components of the hazelnut paste in the final package.*

*In an exemplary embodiment the following amounts are used:*
*959, 8 to 949, 7 liters of milk*
*25 to* 35 *kg of deshelled hazelnut nuts*
*0,2 to 0,3 kg of seaweed*
*15 kg of cocoa powder*

As above seen, the amount of hazelnut paste to reconstituted milk is in the range of 1:31,67 to 1:48,25 and the ratio by weight of hazelnut nuts to milk is in the range of 1:27,08 to 1:38,39.

A person skilled in the art may introduce changes and modifications in the described embodiments without departing from the scope of the invention as it is defined in the attached claims.

## Claims

1. A method for obtaining a milk-based drinkable liquid food product, **characterized in that** it comprises the steps of:
a) preparing a mixture with the following ingredients:
- milk,
- water if necessary,
- hazelnuts
b) heating the mixture;
c) homogenizing said mixture;
d) adding cocoa and/or cocoa-containing products to the mixture;
wherein said hazelnuts are already ground or are ground while preparing said mixture or are in paste form, to provide a drinkable liquid containing milk, hazelnut-derived products and cocoa and/or cocoa-containing products.

2. A method according to claim 1, wherein the said hazelnuts are added as de-shelled nuts and are ground with said milk and/or water in step a), to obtain a fluid paste, further comprising the step of:
e) separating a liquid part to be used in the final beverage from the paste obtained at step c);
and wherein the said cocoa and/or cocoa containing products are added to said mixture in step a) or to the liquid part obtained at step e).

3. A method according to claim 1 wherein the amount of cocoa and/or cocoa-containing products added to the mixture in step a) or to the mixture of step e) is in a range of 0.5 to 2.0% by weight of the total weight of the mixture.

4. A method according to any claim 1 to 3, wherein an emulsifier and/or stabilizer is/are added to said mixture.

5. A method according to any claim 1 to 4, wherein ground hazelnuts are added as a paste to said mixture in step a).

6. A method according to any claim 2 to 5, wherein dry marine algae are treated together with said hazelnuts in step a).

7. A method according to any claims 1 to 6, wherein said milk is selected from liquid milk and powder milk.

8. A method according to any claim 1 to 7, wherein the amount of hazelnuts is in a range of 1% to 5% by weight with respect to the total mixture to which it is added.

9. A method according to claim 7 or 8, further comprising the step of adding to the mixture at least one additional ingredient from the group consisting of calcium or other minerals, salts, sugars, sweeteners, vitamins, soluble cereals, coffee, emulsifiers and stabilizers, or a combination thereof, in an amount of up to 5% of the total weight of the second mixture.

10. The method according to claim 9, wherein said ingredients are 0.1 -0,8% by weight of the total weight of the dry matter in the final beverage composition.

11. A method according to any claim 2 to 10, comprising the following steps:
f) grinding hazelnuts in a mill, in the presence of water and/or milk, said water and/or milk being heated to a temperature of 60 to 95°C for at least part of the grinding time, to prepare a first mixture,
g) homogenizing said mixture;
h) separating from the homogenized mixture a liquid part to provide a liquid beverage;
i) preparing a second mixture by adding cocoa and/or cocoa containing products to said liquid part separated from said mixture of ground hazelnut.

12. A method according to any previous claim, wherein said cocoa is cocoa powder.

13. An intermediate for producing a liquid food product as obtainable through a process according to any claim 1 to 12, **characterized in that** it comprises:
- ground hazelnuts in a range of 1 and 5% by weight with respect to the total mixture;
- an emulsifier and/or stabilizer;
- optionally marine algae in a range of 0.01 and 0.15% of the total weight of the composition, and
- milk and optionally water enough to reach 100% by weight.

14. A liquid food product as obtainable through a process according to any claim 1 to 12, **characterized in that** it comprises milk, hazelnuts and cocoa.

15. A liquid food product according to claim 14, further comprising products deriving from seaweed, and one or more of the following: soluble fibers including carragenins and natural occurring stabilizer, calcium, vitamins, proteins, fatty acids, sterols, high quality proteins, magnesium, iodine, iron, phosphorus, sodium.

16. The liquid food product according to claim 14 or 15, wherein the granulometry of the solid particles therein contained is within the range of 2 to 10 µm.
